# EUROPÄISCHE PATENTANMELDUNG

(11) **EP 0 541 957 A1**
(43) Veröffentlichungstag der Anmeldung: **19.05.1993**
(21) Anmeldenummer: 92117104.7
(22) Anmeldetag: 07.10.1992
(51) Int. Cl.: B60T 17/22

(54) **Druckluft-Bremsanlage für Fahrzeuge**

(30) Priorität: 11.11.1991 DE 4136978
(71) Anmelder: ROBERT BOSCH GMBH, 70442 Stuttgart (DE)
(72) Erfinder: Stumpe, Werner, Dipl.-Ing., W-7000 Stuttgart 50 (DE); Schlichenmaier, Andreas, Dipl.-Ing. (FH), W-7129 Zaberfeld-Leonbronn (DE); Wrede, Jürgen, Dipl.-Ing., W-7000 Stuttgart 50 (DE)

(57) **Zusammenfassung**

Es wird eine Druckluft-Bremsanlage vorgeschlagen, bei der die Betriebsbremse mit einer elektro-pneumatischen Bremseinrichtung kombiniert ist mit einem elektronischen Steuergerät (15, 18) als elektrischer Schalt-Zentrale für die Bremsanlage. Dabei werden Einrichtungen wie Ventile (35) zur Steuerung der Energie, d.h. Luft aus einem Vorratsbehälter (3), ferner Bremszylinder (10) und als Sensoren (21 bis 24 und 26 bis 31) ausgebildete Zustandsfühler sowie ein Fahrtschalter (25) elektronisch überwacht, um Kenndaten zu ermitteln und/oder die einzelnen Komponenten zu justieren. Diese Vorgänge laufen ab bei einem für die Fahrsicherheit ungefährlichen Betriebszustand des Kraftfahrzeuges.

Die Druckluft-Bremsanlage ist bestimmt für Lastkraftwagen und deren Anhänger und für andere Nutzfahrzeuge.

## Beschreibung

### Stand der Technik

Die Erfindung bezieht sich auf eine Druckluft-Bremsanlage für Fahrzeuge nach der Gattung des Hauptanspruchs. Eine derartige Bremsanlage ist bekannt (DE 33 46 919).

Bei solchen Druckluft-Bremsanlagen sind gemäß Vorschriften der Straßenverkehrsordnung eine mehrkreisige Betriebsbbremse und eine Feststellbremse auf dem Zugwagen vorgesehen. Über einen Bremswertgeber (Bremsventil) kann das Steuergerät aus einer Energiequelle (Vorratsbehälter) einen Verbraucher (Bremszylinder) mit Druckluft betreiben, so daß letzterer die Fahrzeug-Bremsen betätigt.

Bei diesen bekannten Bremsanlagen sind auch Einrichtungen vorgesehen worden, mit denen eine automatische Korrektur und Justierung von Druckmeßfühlern durchführbar ist (DE 34 16 744). Ebenso wurde bereits beschrieben, die Funktion von Steuerventilen in der Bremsanlage zu überwachen (EP 0 110 119 B1).

Schließlich ist es auch bereits bekannt, die Hübe der Kolbenstange von Bremszylindern und den Verschleißzustand von Bremsbelägen zu kontrollieren (DE 33 48 387).

Diese Kontrollen laufen aber entweder einzeln, d.h. jede für sich ab oder sie sind von uneinheitlichen Anfragen, wie z.B. bei einer Durchprüfung der Bremsanlage bei einer Fahrzeug-Wartung, abhängig. Es fehlt also entweder eine Koordination oder es sind viele Anfragen nötig, um letztendlich zu einem Gesamturteil über die Anlage zu gelangen.

Der Erfindung liegt die Aufgabe zugrunde, diesen Nachteil zu vermeiden und bei einem ausgewählten Betriebszustand eine Mehrheitsentscheidung aus mehreren signifikanten Werten herbeizuführen. Dabei sollen charakteristische Funktionsgrößen ermittelt werden, z.B. Anlegedruck und Anlegehub am Bremszylinder und Systemzeiten oder dergleichen bei definierten Bedingungen, um beispielsweise das Verhalten der Regelung der Bremsanlage zu optimieren oder Aufschluß über die Beschaffenheit von Komponenten des Bremssystems und vom Bremssystem selbst zu erhalten.

Desweiteren sollen auch Voraussetzungen geschaffen werden für definierte und gezielte Aktivitäten in der elektrischen Bremsanlage, ohne daß die Betriebsbereitschaft und die Betriebssicherheit der Bremsanlage gemindert wird.

Diese Aufgabe wird bei der eingangs genannten Bremsanlage durch die kennzeichnenden Merkmale des Hauptanspruchs gelöst.

### Zeichnung

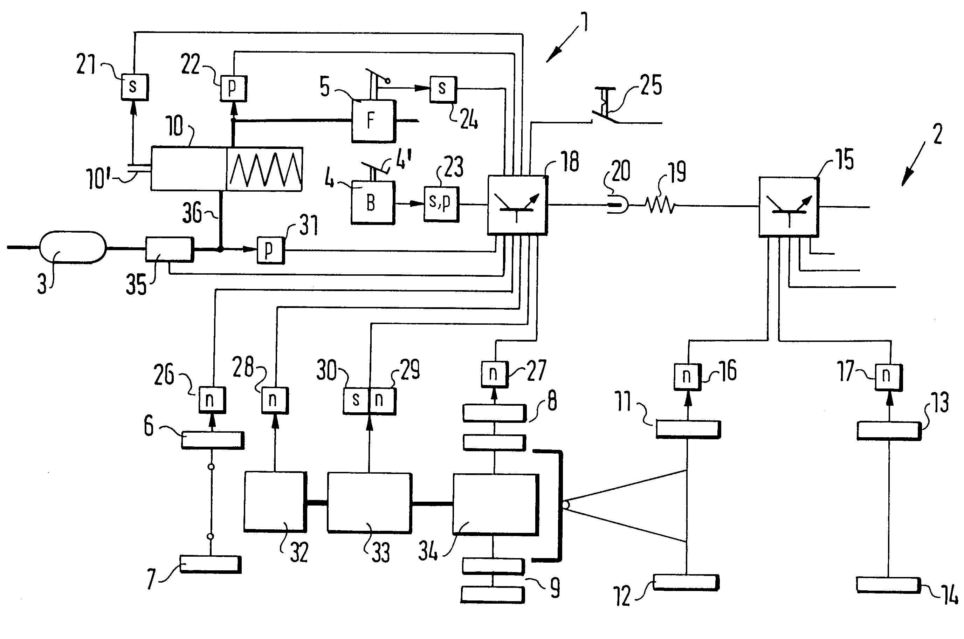

Ein Ausführungsbeispiel der Erfindung ist in der Zeichnung dargestellt und in der nachfolgenden Beschreibung näher erläutert.

### Beschreibung des Ausführungsbeispiels

Ein Wagenzug besteht aus einem Zugwagen 1 und einem Anhänger 2. Auf dem Zugwagen 1 ist eine Druckluft-Bremsanlage installiert, die im wesentlichen aus einem Vorratsbehälter 3 als Druckmittelquelle, einem fußbetätigten Bremswertgeber 4 (Trittplatten-Bremsventil), einem handbetätigten Bremswertgeber 5 (Feststell-Bremsventil) und je einem den jeweiligen Fahrzeugrädern 6, 7, 8 und 9 zugeordneten Bremszylinder 10 besteht. Der Anhänger 2 mit den Rädern 11, 12, 13, 14 ist ebenfalls mit einer Druckluft-Bremsanlage ausgerüstet, deren Einzelteile aber nicht zeichnerisch dargestellt sind. Lediglich ein elektronisches Steuergerät 15 und zwei Drehzahlsensoren 16, 17 sind eingezeichnet. Die beiden Drehzahlsensoren 16 und 17 sind an das Steuergerät 15 zur Signalabgabe angeschlossen.

Auf dem Zugwagen 1 gibt es ebenfalls ein elektronisches Steuergerät 18, das mit dem Anhänger-Steuergerät 15 über eine elektrische Verbindung 19 mit Kupplung 20 verbunden ist. Desweiteren sind an das Zugwagen-Steuergerät 18 noch andere elektrische Leitungen angeschlossen, über die zugwagenspezifische Signale an das Steuergerät 18 abgegeben werden, um dort ausgewertet und verarbeitet zu werden.

Im Einzelnen geht es um folgende Signale:
- ein Sensor 21 am Bremszylinder 10 liefert ein Wegsignal s einer Bremszylinder-Kolbenstange 10',
- ein Sensor 22 am Bremszylinder 10 gibt ein Drucksignal p der Feststellbremsanlage
- ein Sensor 23 am Bremswertgeber 4 liefert ein Wegsignal s oder ein Drucksignal oder beides von einer Trittplatte 4',
- ein Sensor 24 am Bremswertgeber 5 der Feststellbremse emittiert ein Wegsignal s,
- ein Fahrtschalter 25 liefert unmittelbar ein Signal an das Steuergerät 18,
- ein Sensor 26 liefert ein Drehzahlsignal n von den Rädern 6 und/oder 7 der Vorderachse,
- ein Sensor 27 gibt ein Drehzahlsignal n von den Rädern 8 und/oder 9 der Hinterachse (es liegt auf der Hand, daß es auch möglich ist, die Drehzahl n jedes Rades 6, 7, 8 oder 9 einzeln an das Steuergerät 18 zu melden),
- ein Sensor 28 ermittelt die Drehzahl n einer das Kraftfahrzeug antreibenden Kraftmaschine 32,
- ein Sensor 29 gibt ein Drehzahlsignal n eines Getriebes 33 ab und und
- ein Sensor 30 ermittelt Schaltwege s im Getriebe 33, das über einen Achs-Antrieb 34 auf die Hinterräder 8 und 9 einwirkt; außerdem kann noch die Stellung der Kupplung zwischen Kraftmaschine 32 und Getriebe 33 übertragen werden;
- schließlich ist noch ein Druck-Sensor 31 vorgesehen, der den von einem elektro-pneumatischen Ventil 35 ausgesteuerten Druck p an das Steuergerät 18 meldet. Das Ventil 35 liegt in einer Verbindungsleitung 36, die vom Vorratsbehälter 3 unmittelbar zum Bremszylinder 10 führt. Über dieses Ventil 35 kann nach Ansteuerung durch das Steuergerät 18 Druck aus dem Vorratsbehälter 3 direkt zum Bremszylinder 10 gelangen: die pneumatische Bremse wird auf diese Weise elektrisch betätigt.

Die Anordnungen der Sensoren gelten aber auch für Bremsanlagen mit pneumatischem Rückhaltkreis der eingangs erwähnten Art (DE 33 46 919).

### Wirkungsweise

Zum Zwecke des Durchführens von Prüf- und Justier-Abläufen in sicheren Betriebszuständen des Fahrzeuges muß ein solch definierter, ungefährlicher Betriebszustand auf Anforderung oder automatisch ermittelbar sein.

Dazu werden mittels der Sensoren 21 bis 24 und 26 bis 31 sowie des Fahrtschalters 25 Signale produziert, mit denen Merkmale geschaffen werden, welche zur Entscheidung über den Betriebszustand relevant sind.

Beispielsweise kann ein automatischer Prüf- und Justier-Ablauf erfolgen, wenn das Fahrzeug stillsteht. Ein stehendes Fahrzeug wird über die Drehzahl-Sensoren 26, 27 und 16, 17 erkannt. Auch die mit dem Drehzahl-Sensor 28 gemessene Motordrehung gibt einen Hinweis auf Fahrzeugstillstand, ebenso wie eine Bewegung im Getriebe 33 (Drehsensor 29) oder die Schaltstellung desselben (Wegsensor 30). Auch eine betätigte Feststellbremse wird durch den Sensor 24 (Weg s, Druck p) erkannt und ist geradeso auswertbar wie der Druck oder der Hub des Bremszylinders 10 (Sensoren 21 und 22). Dabei läßt auch die Zeitdauer eines anstehenden Signals auf ein stehendes Fahrzeug schließen. Hat ein elektronisches Steuergerät 15 oder 18 einen eindeutigen Zustand des Fahrzeuges identifiziert, kann es ein entsprechendes Signal an das andere Steuergerät 18 oder 15 weitergeben.

Da in der Regel ein Signal allein nicht ausreicht, eindeutig ein in Ruhe befindliches Fahrzeug zu erkennen, wird vorzugsweise ein anderes Sensor-Signal zusätzlich herangezogen. So kann z.B. auch bei einer ausreichend langen Betätigung der Feststellbremse (erkennbar durch ein Signal des Sensor 24) auf ein stehendes Fahrzeug geschlossen werden. Das gilt auch für eine Kombination von Feststell-Bremssignal und Rad-Drehzahl-Signal. Schließlich läßt ein geöffneter Fahrtschalter 25 (Zündschloß) auf ein abgestelltes Fahrzeug schließen, wobei auch hier die Aussage durch ein anderes Signal vom Getriebe 33 oder dergleichen unterstützt werden kann. Ebenso, wenn der Bremszylinder 10 seit einiger Zeit Druck hat (Sensor 31) oder drucklos ist (Sensor 22) bzw. ausgefahren ist (Sensor 21), kann man auf ein stehendes Fahrzeug schließen. Auf diese Weise stehen für den Zugwagen 1 und den Anhänger 2 genügend Erkennungs-Merkmale zur Verfügung, um einen jeweils ungefährlichen Fahrzustand mit Sicherheit festzustellen.

Schließlich ist es auch möglich, bei geöffnetem Fahrtschalter 25, wenn also die elektronischen Steuergeräte 15, 18 nicht über den Fahrtschalter stromversorgt sind, die vorgesehene Prozedur ablaufen zu lassen. Es ist dann nur notwendig, die erfindungsgemäße Bremsanlage mit einer Einrichtung zu versehen, wie sie durch die DE 35 43 331 Al bekannt ist. Bei dieser bekannten Bauart ist zwecks ständiger Betriebsbereitschaft der Bremsanlage auch bei abgestelltem Fahrzeug eine Steuergerät-Weckvorrichtung mit extrem niedriger Leistungsaufnahme eingeschaltet, die das Steuergerät unter Umgehung des Fahrtschalters aktiviert, wenn ein eine Fahrzeugbremsung erforderndes Ereignis, z.B. eine Bremspedalbetätigung eintritt.

Der erfindungsgemäße Prüf- und Justier-Vorgang in der mechanischen und elektromechanischen Komponente kann automatisch ablaufen, beispielsweise nach dem Einschalten des Fahrtschalters 25, wenn das Steuergerät 15 oder 18 seinen internen Testablauf mit Überprüfung der externen, elektrischen Komponenten durchführt, er kann aber auch ablaufen nach dem Ausschalten des Fahrtschalters 25. Ebenso kann eine gewollte Anforderung des Ablaufs nach dem Betätigen einer entsprechenden Fahrzeug-Diagnose-Einrichtung erfolgen, wenn die Freigabe für einen solchen "aktiven" Test aus den Randbedingungen eines sicheren Betriebszustandes des Fahrzeuges erfolgt. Die dabei ermittelten Funktionsdaten oder Fehler der einzelnen Komponenten der Bremsanlage werden in dafür vorgesehenen, elektronischen Speicherplätzen abgelegt. Damit kann dann das Verhalten der Regelung optimiert werden, und es ist möglich, Aufschluß über die Beschaffenheit der einzelnen Komponenten und des gesamten Bremssystems zu erhalten.

### Beispiele für Funktionsdaten

- Ermittlung des Zeitverhaltens der Bremsanlage als Vergleich zu gesetzlich zulässigen Grenzwerten,
- Ermittlung des Zeitverhaltens der Druckregelkreise zur Optimierung der Regelparameter und zur Angleichung der Regelkreise auf gleiches Zeitverhalten.

### Beispiele "aktiver" Tests:

- Funktionskontrolle der einzelnen Regelkreise,
- Prüfen von pneumatischen Leitungen auf Durchgängigkeit, wobei unterschiedliche Leitungszweige für Be- und Entlüften prüfbar sind,
- Funktionstest von Steller und Sensoren im Regelkreis,
- Dichtheitsprüfungen der Bremsanlage,
- Kontrolle der Bremszylinderhübe: Ermittlung von Anlegehub und Anlegedruck, des Gesamthubes, des verfügbaren Resthubes, der Bremsenelastizität.

### Beispiele für Justiervorgänge:

- Justieren von Drucksensoren durch Abgleich von Offset oder Offset und Steigung bei Atmosphären- bzw. maximalem Vorratsdruck,
- Gleichsetzen mehrerer Sensoren auf einen gemittelten Kennlinienverlauf.

## Patentansprüche

1. Druckluft-Bremsanlage für Fahrzeuge mit einer von Druckluft angesteuerten, ventilbestückten Betriebsbremse auf dem Zugwagen und gegebenenfalls auch auf einem mitgeführten Anhänger, wobei die Betriebsbremse mit einer elektro-pneumatischen Bremseinrichtung kombiniert ist, und mit einem elektrischen Steuergerät als Schalt-Zentrale für die Bremsanlage, dadurch gekennzeichnet, daß das Steuergerät (15, 18) mit Hilfe von Sensoren (21 bis 24, 26 bis 31), welche die Energiesteuerung für Ventile (35) und die Stellcharakteristik von Bremszylindern (10) als Zustandsfühler überwachen, gegebenenfalls mit Hilfe anderer Komponenten (Fahrtschalter 25) Kenndaten ermittelt und daß nach diesen Kenndaten ein definierter, für die Fahrsicherheit ungefährlicher Betriebszustand des Kraftfahrzeuges feststellbar ist und daß im Falle solcher ungefährdeter Fahrsicherheit Prüf- und Justierabläufe der Bremsanlage auf Anforderung oder automatisch in Gang setzbar sind.

2. Druckluft-Bremsanlage nach Anspruch 1, dadurch gekennzeichnet, daß die Kenndaten bei Fahrzeug-Stillstand ermittelbar sind.

3. Druckluft-Bremsanlage nach Anspruch 2, dadurch gekennzeichnet, daß ein stehendes Fahrzeug durch Rad-Drehzahl-Sensoren (16, 17, 26, 27), Motordrehzahl-Sensoren (28), Getriebebewegungs-Sensoren (29, 30), durch Sensoren (24) an der Feststellbremse und an den Bremszylindern (10) oder einer Kombination von Signalen der genannten Sensoren feststellbar ist.

4. Druckluftbremsanlage nach Anspruch 2 oder 3, dadurch gekennzeichnet, daß ein stehendes Fahrzeug durch ein Signal eines Fahrtschalters (35) ermittelbar ist.

5. Druckluftbremsanlage nach einem der Ansprüche 2 bis 4, dadurch gekennzeichnet, daß ein stehendes Fahrzeug durch die Zeitdauer eines anstehenden Signals eines oder mehrerer Sensoren ermittelbar ist.
